# EUROPEAN PATENT SPECIFICATION

(11) **EP 0 418 374 B1**
(45) Date of publication and mention of the grant of the patent: **11.10.1995**
(21) Application number: 90906465.1
(22) Date of filing: 03.04.1990
(51) Int. Cl.: C02F 5/10, C23F 11/10, C23G 1/06

(54) **SULFATE SCALE DISSOLUTION**
AUFLÖSUNG VON SULFATNIEDERSCHLÄGEN
DISSOLUTION DE LA CALAMINE DE SULFATE

(30) Priority: 03.04.1989 US 332147; 22.06.1989 US 369897; 03.11.1989 US 431114; 26.02.1990 US 484970; 09.03.1990 US 490886; 14.03.1990 US 493180
(43) Date of publication of application: 27.03.1991
(60) Divisional application: 95200809.2
(73) Proprietor: MOBIL OIL CORPORATION, New York New York 10017 (US)
(72) Inventor: MORRIS, Richard L., Duncanville, TX 75116 (US); PAUL, James Mark, DeSoto, TX 75115 (US)
(74) Representative: Colmer, Stephen Gary
(86) International application number: US9001774
(87) International publication number: WO9011972

(56) References cited:
- JP-A-63 178 199
- US-A- 3 625 761
- US-A- 3 660 287
- US-A- 3 684 720
- US-A- 3 956 164
- US-A- 4 030 548
- US-A- 4 215 000
- US-A- 4 276 185
- US-A- 4 708 805

## Description

This invention relates to sulfate scale dissolution. More particularly the invention relates to compositions and methods for dissolving an alkaline earth metal sulphate scale, especially strontium and barium sulphate scale. The invention is particularly useful for the removal of such scale from oilfield equipment including downhole pipe, tubing and casing as well as subterranean formations. It is also applicable to the removal of these scale deposits from other equipment such as boilers and heat exchangers.

Reference is hereby made to our copending patent application of even date entitle "Method of Decontaminating Earth and/or Natural Gas Processing Equipment". Many waters contain alkaline earth metal cations, such as barium, strontium, calcium and magnesium, and anions, such as sulfate, bicarbonate, carbonate, phosphate, and fluoride. When combinations of these anions and cations are present in concentrations which exceed the solubility product of the various species which may be formed, precipitates form until the respective solubility products are no longer exceeded. For example, when the concentrations of the barium and sulfate ions exceed the solubility product of barium sulfate, a solid phase of barium sulfate will form as a precipitate. Solubility products are exceeded for various reasons, such as evaporation of the water phase, change in pH, pressure or temperature and the introduction of additional ions which can form insoluble compounds with the ions already present in the solution.

As these reaction products precipitate on the surfaces of the water-carrying of water-containing system, they form adherent deposits or scale. Scale may prevent effective heat transfer, interfere with fluid flow, facilitate corrosive processes, or harbor bacteria. Scale is an expensive problem in many industrial water systems, in production systems for oil and gas, in pulp and paper mill systems, and in other systems, causing delays and shutdowns for cleaning and removal.

Barium and strontium sulfate scale deposits present a unique and particularly intractable problem. Under most conditions, these sulfates are considerably less soluble in all solvents than any of the other commonly encountered scale-forming compounds, as shown by the comparative solubilities given in Table 1 below.

**Table 1**

| Comparative Solubilities, 25°C in Water. | |
|---|---|
| Scale | Solubility, mg./l. |
| Gypsum | 2080.0 |
| Strontium sulfate | 140.0 |
| Calcium Carbonate | 14.0 |
| Barium sulfate | 2.3 |

It is generally acknowledged that barium sulfate scale is extremely difficult to remove chemically, especially within reasonably short periods of time: the solvents which have been found to work generally take a long time to reach an equilibrium concentration of dissolved barium sulfate, which itself is usually of a relatively low order. Consequently, barium sulfate must be removed mechanically or the equipment, e.g.pipes, etc., containing the deposit must be discarded.

The incidence of barium sulfate scale is worldwide, and it occurs principally in systems handling subsurface waters. Because of this, the barium sulfate scale problem is of particular concern to the petroleum industry as water is generally produced with petroleum and as time goes on, more petroleum is produced by the waterflooding method of secondary recovery, implying even greater volumes of produced water. The scale may occur in many different places, including production tubing, well bore perforations, the area near the well bore, gathering lines, meters, valves and in other production equipment. Barium sulfate scale may also form within subterranean formations such as in disposal wells. Scales and deposits can be formed to such an extent that the permeability of the formation is impaired resulting in lower flow rates, higher pump pressures, and ultimately abandonment of the well.

Barium sulfate scale is particularly troublesome when sulphate-rich seawater is used as an injection fluid in oil wells whose formation water is rich in barium ions. This particular aspect of the barium scale problem is severe in some U.S. oil fields as well as some older North Sea oil fields. Scaling of this nature is also expected to occur during advanced production stages in other North Sea fields particularly after seawater breakthrough has taken place.

Another problem associated with the formation of barium and strontium sulfate scales is that radium, another member of the alkaline earth group of metals tends to be deposited at the same time so that the equipment becomes radioactive, and may eventually have to become unusable for safety reasons alone. At present, a considerable amount of oilfield tubular goods are in this condition and cannot be readily restored to usable condition because of the difficulty of removing the radioactive scale.

Various proposals have been made in the past for removing barium sulfate scale chemically. Most of these processes have utilised chelating or complexing agents, principally the polyaminopolycarboxylic acids such as ethylenediaminetetraacetic acid(EDTA) or diethylenetriaminepentaacetic acid(DTPA).

US-A-2877848 discloses the use of EDTA in combination with various surfactants for this purpose. US-A-3660287 discloses the use of EDTA and DTPA in the presence of carbonate ion at relatively neutral pH (6.5-9.5) and US-A-4,708,805 discloses a process for the removal of barium sulfate scale by sequestration using an agueous solution of citric acid, a polycarboxylic acid such as carbazic acid, and an alkylene-polyaminopolycarboxylic acid such as EDTA or DTPA. The preferred aqueous sequestering solutions have a pH in the range of about 9.5 to about 14, provided by a base such as potassium hydroxide or potassium carbonate.

Another approach which has recently been made is to use a polyether in combination with the aminopolycarboxylic acid. US-A-4,190,462 discloses that barium sulfate scale can be removed from remote locations extending into a subterranean earth formation by contacting the scale with an aqueous solution consisting essentially of water, a monovalent cation salt of a monocyclic macroyclic polyether containing at least two nitrogen-linked carboxymethyl groups and enough monovalent basic compound to provide a solution pH of about 8. Similar disclosures are to be found in US-A-4,215,000 and US-A-4,288,333. These polyether materials have, however, the disadvantage of being costly which is a severe drawback for oilfield use where cost is a major factor.

Although many of these known compositions will remove scale, the rate of dissolution is slow and the amount of scale dissolved is small.

We have now found a way of removing barium sulfate scale using various novel combinations of scale-removing agents. These combinations are capable of removing scale at markedly higher speeds than prior scale-removing compositions and are also capable of removing relatively more scale for a given quantity of solvent. They are, moreover, relatively cheap and are therefore well suited to use in oilfield operations.

According to the present invention there is provided a method for removing alkaline earth metal sulfate scale, as defined in claim 1.

Earth features of the invention are defined in the dependent claims.

In both aspects of the invention scale the constituents are preferably selected such that about 80% to about 90% of a solution level of barium, strontium or calcium sulfate is dissolved from powdered scale in about 10 minutes at a temperature of about 100°C.

Substantially improved scale dissolution rates are obtained when the aqueous solution containing the composition is at a temperature of about 25°C to about 100°C, but higher temperatures are obtainable downhole because at greater formation depths higher existing pressures will raise the boiling point of the aqueous solution, and consequently greater scale removal rates may be attained.

In accordance with the present invention, alkaline earth metal sulfate scales, especially barium sulfate scale, are removed by the use of a combination of chemical scale-removing agents. The method is particularly useful for the removal of such scale from oilfield equipment used to bring oil and/or water from subterranean formations to the surface. The method may, however, also be used to remove scale from the formations themselves, especially in the regions surrounding production and injection wells, as mentioned above. The method may also be used to remove scale from above-ground equipment both in the oilfield and elsewhere, for example, from boilers and heat exchangers and other equipment exposed to scale-forming conditions.

The scale itself is usually in the form of an adherent deposit of the scale-forming mineral on metal surfaces which have been exposed to the water containing the scale-forming components. These components comprise alkaline earth metals including calcium, strontium and barium, together with variable amounts of radium, depending upon the origin of the waters. As noted above, barium sulfate scale is particularly difficult to remove by existing chemical methods in view of its very low solubility.

The present scale removal is effected with an aqueous solvent which comprises a polyaminopolycarboxylic acid such as EDTA or DTPA as a chelant or chelating agent which is intended to form a stable complex with the cation of the alkaline earth scale-forming material. Of these chelants, DTPA is the preferred species since it forms the most soluble complexes at greater reaction rate. EDTA may be used but is somewhat less favourable and, as noted below, may be less responsive to the addition of the catalyst. The chelant may be added to the solvent in the acid form or, alternatively, as a salt of the acid, preferably the potassium salt. In any event the alkaline conditions used in the scale removal process will convert the free acid to the salt.

The concentration of the chelant in the solvent should normally be at least 0.1M in order to achieve acceptable degree of scale removal. Chelant concentrations in excess of 1.0 M are usually not necessary and concentrations from about 0.3M up to about 0.6M will normally give good results; although higher concentrations of chelant may be used, there is generally no advantage to doing so because the efficiency of the chelant utilisation will be lower at excess chelant concentrations. This economic penalty is particularly notable in oilfield operations where large volumes of solvent may be used, especially in formation scale removal treatment.

The oxalate may be added as the free acid or the salt, preferably the potassium salt. If the free acid is used, addition of the potassium base to provide the requisite solution pH will convert the acid to the salt form under the conditions of use.

The concentration of the catalyst in the aqueous solvent will be of a similar order to that of the chelant: thus, the amount of the catalyst anion in the solvent should normally be at least 0.1M in order to achieve a perceptible increase in the efficiency of the scale removal, and concentrations from about 0.3M up to about 0.6M will give good results. Although higher concentrations of the catalyst e.g. about 1.0M may be used, there is generally no advantage to doing so because the efficiency of the process will be lower at excess catalyst concentrations. Again, this economic penalty is particularly notable in oilfield operations.

The scale removal is effected under alkaline conditions preferably at pH values of from about 8.0 to about 14.0, with optimum values being from about 11 to 13, preferably about 12.

The preferred solvents comprise about 0.1 to about 1.0M of ethylenediaminetetraacetic acid (EDTA) or diethylenetriaminepentaacetic acid (DTPA), or salts of these acids, as a chelant. In addition, the oxalate anion is added to the aqueous solution in about 0.01 to about 1.0, preferably about up to 0.5M. The pH of the solvent is then adjusted by the addition of a base, to the desired value, preferably to about pH 12. The base may be a hydroxide of lithium, sodium, potassium or cesium, but potassium is preferred. We have found that it is important to avoid the use of sodium cations when operating at high pH values, above pH 8, and instead, to use potassium or, alternatively, cesium as the cation of the scale-removing agent. Potassium is preferred for economy as well as availability. Thus, the normal course of making up the solvent will be to dissolve the chelant and the acid synergist (or its potassium salt) in the water to the desired concentration, after which a potassium base, usually potassium hydroxide is added to bring the pH to the desired value of about 12. This aqueous composition can be used to remove scale from the equipment, or alternatively, pumped into the subterranean formation when it is the formation which is to be subjected to descaling.

The mode of operation of the catalyst is not presently understood. While not desiring to be bound to a particular theory concerning the actual mechanism of its activity in converting or dissolving the scale, it is believed that adsorption of the catalyst on the barium sulfate surface may modify the surface crystal structure in such a way that the barium in the modified crystal is easily removed by the chelating agent.

The aqueous solution containing the composition can be directed down a wellbore to remove barium sulfate scale which has fouled the tubular equipment e.g. piping, casing etc., and passage ways. Prior to being directed into the wellbore, the composition may be heated to a temperature between about 25°C to about 100°C., although the temperatures prevailing downhole may make pre-heating unnecessary. Once within the tubular goods and the passageways requiring treatment, the composition is allowed to remain there for about ten minutes to about 7 hours. After remaining in contact with the equipment for the desired time, the composition containing the dissolved scale is produced to the surface and may be disposed of as required, possibly by re-injection into the subsurface formation. This procedure can be repeated as often as required to remove scale from the equipment.

In one procedure for circulating the solvent through the tubular goods in the well the solvent is pumped down through the production tube and returned to the surface through the annular space between the production tubes and the casing (or vice versa). Also, the cleaning solution may be pumped down through the production tubing and into the formation, thereby cleaning the well, including the well casing, and the formation pore space by dissolving barium sulfate present as it flows over and along the surfaces that need cleaning. The spent composition containing the dissolved, complexed barium together with any other alkaline earth metal cations which may nave been present in the scale, especially radium, can be subsequently returned to the surface, for example, by displacement or entrainment with the fluids that are produced through the well after the cleaning operation. In an alternative manner, the cleaning solution may be applied batchwise fashion, for example, by flowing the solution into the well and optionally into the pore spaces of the adjacent earth formation and there keeping the solution in contact in non-flowing condition with the surfaces that are covered with barium sulfate scale, for a period of time sufficient to dissolve the scale.

The present scale removal technique is very effective for lowering residual radioactivity of pipe contaminated with radium-containing barium sulfate scale. As noted above, radium is frequently precipitated with barium in scale with the result that scaled pipe is often radioactive to the point that it cannot safely be used. Using the present scale removal compositions, activity can be reduced to an acceptable level in comparatively short times without further treatment. Some residual activity arises from lead and other radio-isotopes which are not dissolved in the solvent: these isotopes are decay products of radium and have originally been incorporated in the scale with the barium and the radium sulfates. Although they are not removed chemically by the present scale removal technique, the dissolution of the barium scale together with the other alkaline earth metal sulfates enables these other components of the scale to be removed by simple abrasion, for example, by scrubbing with or without a detergent/water scrub solution. In this way, the residual activity level may be reached to a very low value, below the appropriate regulatory standards. Thus, by using the present chemical scale removal technique in combination with a simple mechanical removal of loose, non-adherent material, previously radioactive pipe may quickly and readily be restored to useful, safe condition.

Reference is now made to the accompanying drawings in which:
Figure 1 is a graph which depicts the dissolution efficiency of barium sulfate as a funtion of ligand concentration;
Figure 2 is a graph which depicts the free energy of reaction for barium sulfate conversion at 25°C;
Figure 3 is a graphical representation of the rate of barium sulfate dissolution in the presence of a solution having a pH of 12, 0.5 M DTPA, and varying concentrations of an oxalate catalyst at a temperature of 100°C,
Figure 4 is a graph which shows the effect of chelant concentration on the rate of barium sulfate dissolution,
Figure 5 is a graphical representation of the rate of barium sulfate dissolution in 0.5M EDTA with catalysts of 0.5M oxalate, 0.5M potassium fluoride and 0.5M potassium acid tartrate,
Figure 6 is a graph depicting the rate of barium sulfate dissolution in 0.5M DTPA with catalysts of 0.5M potassium fluoride, 0.5M oxalate, and 0.5M potassium acid tartrate at 25°C,
Figure 7 is a graph which shows the rate of dissolution of barium sulphate in various solvents,
Figure 8 is a graph which depicts the rate of barium sulfate dissolution in 0.5M DTPA with catalysts of 0.5M potassium fluoride and 0.5M oxalate at various temperatures,
Figure 9 is a graph which shows effect of temperature on the rate of barium sulfate dissolution,
Figure 10 is a graph which shows the respective rates of dissolution of various sulfate species on a chelant-containing solvent,
Figure 11 is a graph which shows the respective rates of dissolution of various barium sulfate species in a chelant-containing solvent,
Figure 12 is a graph which shows the low residual rates of radioactivity which may be achieved for contaminated oilfield pipe by use of the present scale removal process.

The method according to the invention is particularly useful for more efficiently removing barium or strontium sulfate scale from wells, wellstream processing equipment, pipelines and tubular goods used to produce oil from a subterranean formation.

In order to demonstrate the barium sulfate scale-dissolving capacities of the composition, several aqueous solutions have been tested in laboratory tests the results of which are described in the discussions which follow. The experiments described below were, except as noted below, carried out in a cylindrical glass vessel having a height of 10 cm and an internal diameter of 7.5 cm. Barium sulfate, or where applicable, other solid scale components were added to the test solution and agitated with the selected solvents and the rates of dissolution and final dissolved concentrations determined. The results are reported graphically in the figures.

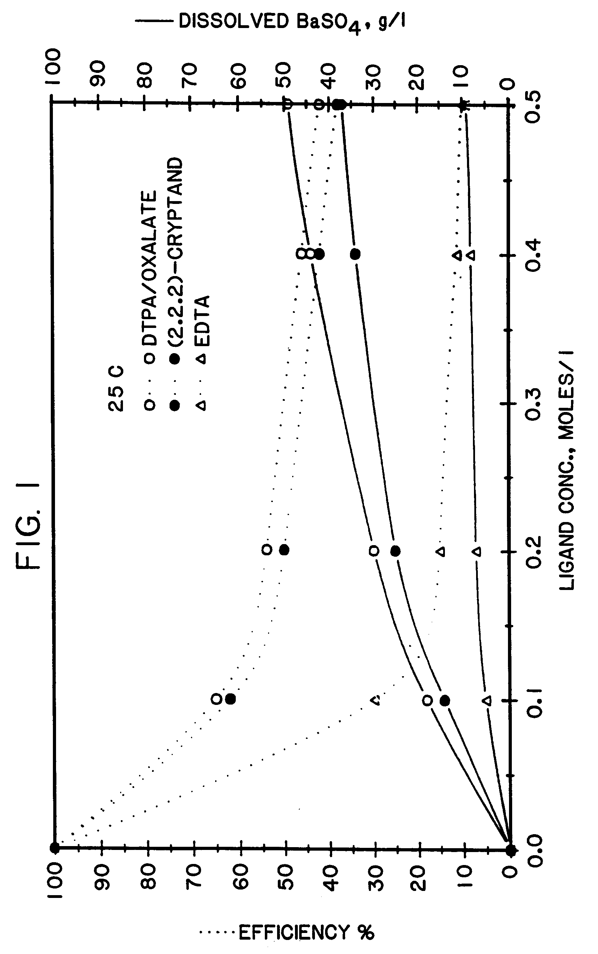

As shown in Figure 1, varying concentrations of DTPA and EDTA are compared with 2.2.2-cryptand which is described in US-A-4,215,000. As described, various concentrations of DTPA with oxalate and EDTA were compared with the barium sulfate dissolution of 2.2.2-cryptand. The results were obtained at 25°C and demonstrate that DTPA/oxalate complexes more barium sulfate (49 g/l) than 2.2.2-cryptand (37 g/l). As the dotted lines in the graph reveal, DTPA/oxalate is substantially more efficient than either 2.2.2-cryptand or an EDTA chelant at all concentrations. Efficiency of a chelant or solvent is defined as the fraction of chelant that is complexed with barium divided by the total concentration of chelating agent.

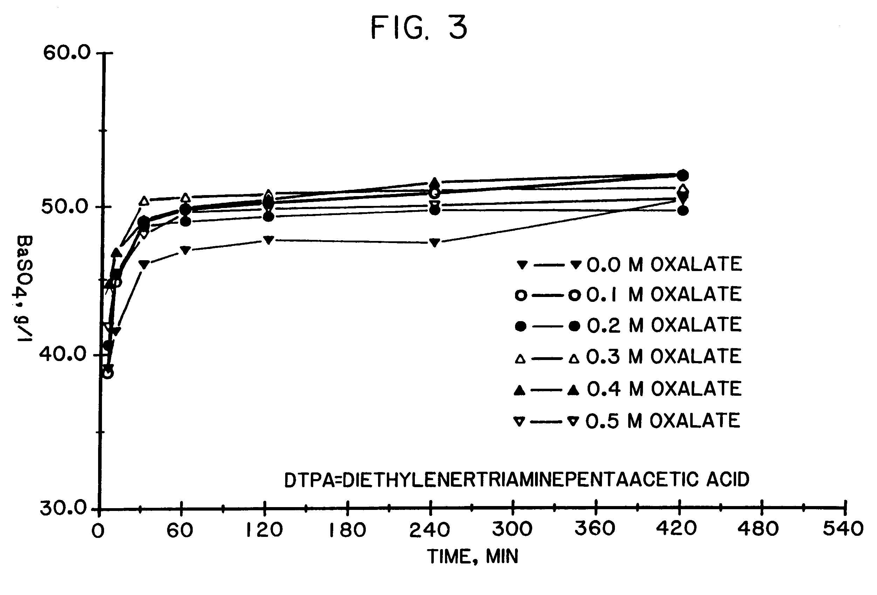

The amount of oxalate catalyst utilized in combination with DTPA is not critical, within the limits described above. This is illustrated in Figure 3 which shows that all concentrations of oxalate catalyst from 0.1 to 0.5M contribute to the dissolution of 80 to 90 percent of the saturation level of barium sulfate within ten (10) minutes of contact. Additionally, as demonstrated in Figure 3, the fast rate of dissolution is a significant feature of the present scale removal technique. In practical applications of the methods therefore, contact times of less than about 4 hours, eg. 1 or 2 hours, may be sufficient, depending on the scale thickness. Another significant feature of the technique is the high equilibrium (saturation) levels of dissolved barium, strontium and calcium sulfate scales which are obtained in the aqueous solution, making the process particularly efficient in terms of solvent utilisation.

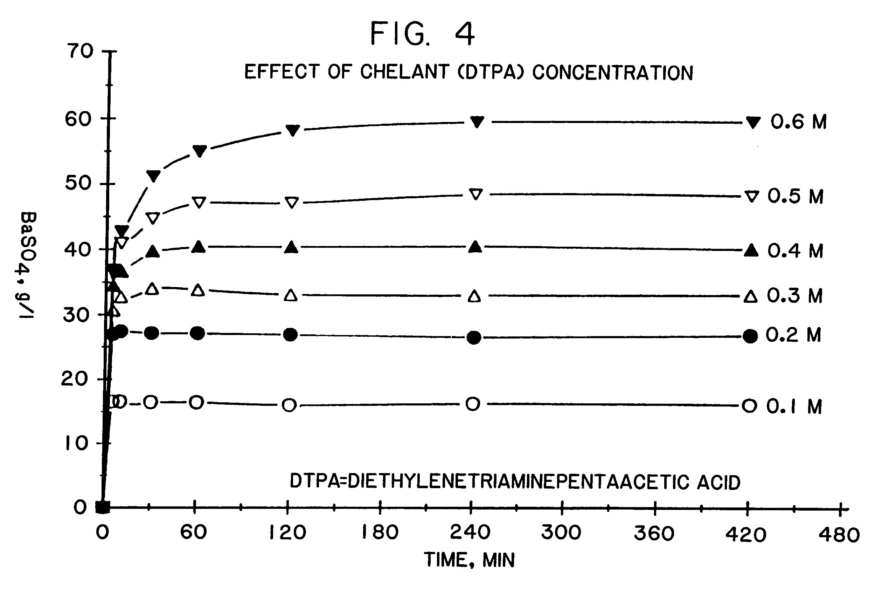

Barium sulfate or other scales dissolved in the solvent are influenced by the concentration of chelant used. The effect of varying the DTPA concentration (100°C) is depicted in Figure 4 at chelant concentrations from 0.1M to 0.6M. Increased DTPA concentration causes an increase in the rate of barium sulfate dissolution and the amount of barium sulfate held in the solvent. It should be noted in particular that the final equilibrium concentration of barium sulfate is 60 g/l which is far in excess of the solubility in water alone.

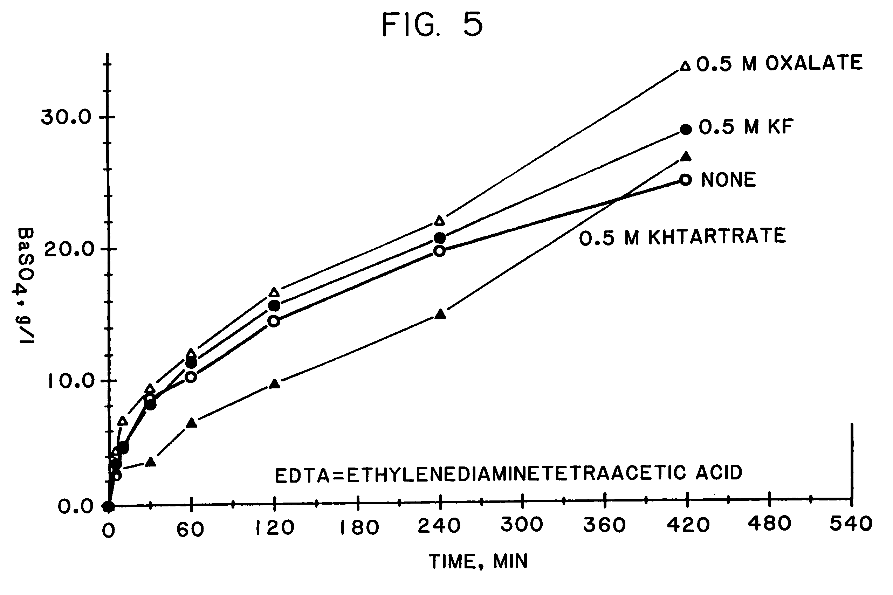

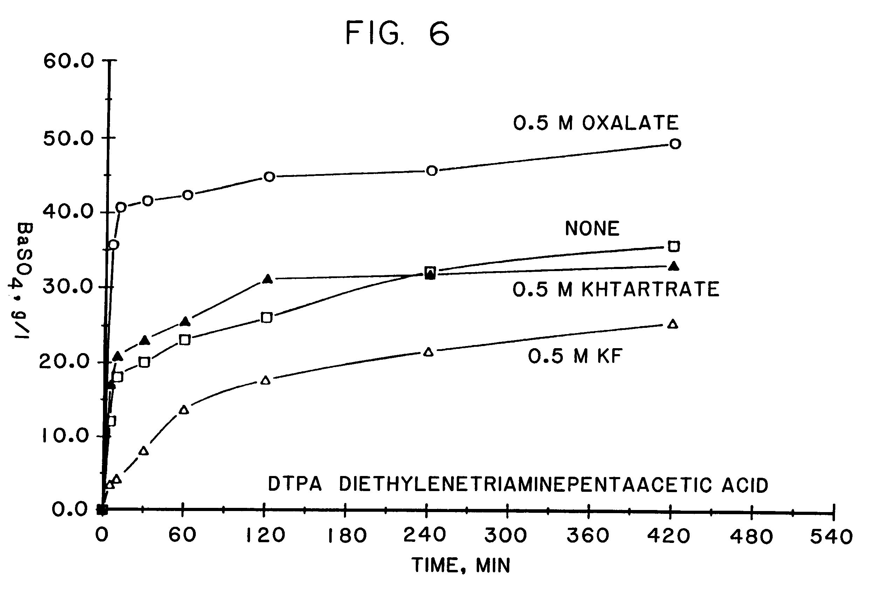

Figure 5 illustrates the rate of barium sulfate dissolution ten 0.5 M EDTA is used with 0.5 M catalysts including oxalate, potassium fluoride and potassium hydrogen tartrate. Figure 5 also illustrates the barium sulfate dissolution rate when 0.5 M EDTA is used alone. The temperature of the solvent in which the catalyst is used affects the rate of barium sulfate or scale dissolution. This is further shown in Figure 6. Here differences in the barium sulfate or scale dissolution rate of a solvent containing 0.5 M DTPA is shown when the temperature is maintained at 100°C and 25°C with designated catalysts. These catalysts comprise 0.5 M potassium fluoride, 0.5 M oxalate and 0.5 M potassium acid tartrate.

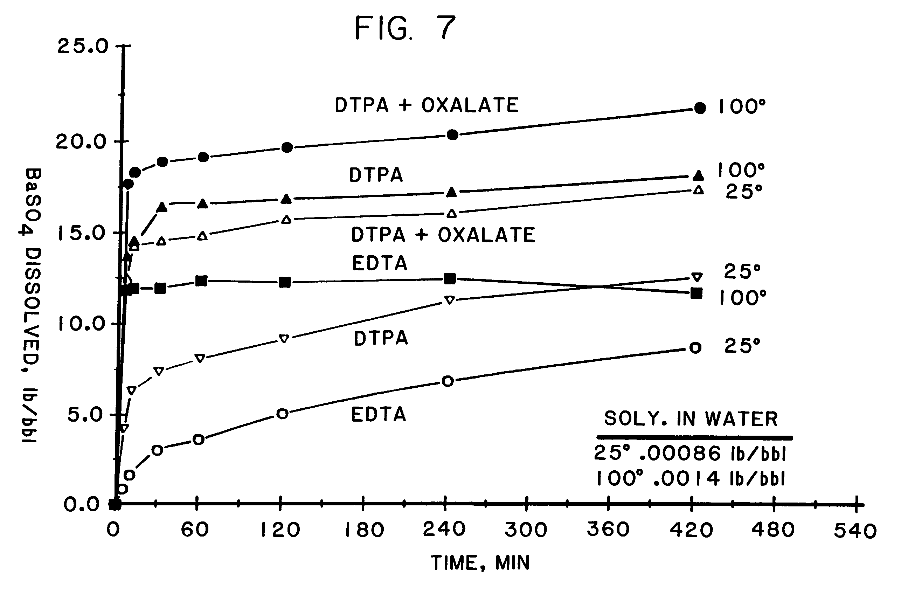

Effectiveness of an oxalate catalyst is shown with DTPA when compared to DTPA alone at 25°C and 100°C. This is illustrated in Figure 7. DTPA with oxalate at 25°C has nearly the same barium sulfate dissolution rate as DTPA only at a temperature of 100°C. Examining Figure 7, it is readily apparent that the oxalate catalyst caused the difference. This is apparent since the barium sulfate dissolution rate of DTPA with oxalate at 25°C is much greater than the dissolution rate of barium sulfate by DTPA alone at 25°C. As illustrated in Figure 7, about 90 percent of the scale is dissolved in the lab within the first ten minutes of contact, using Powdered BaSO4. Much slower rates of barium sulfate dissolution are shown when EDTA and DTPA are utilized without a catalyst at 25°C. The results show that the DTPA/oxalate combination complexes more barium sulfate than DTPA alone and that DTPA is more effective than EDTA at both temperatures. Furthermore when the oxalate is present with the DTPA, the equilibrium concentration of dissolved barium sulphate is reached far more quickly than with either the EDTA or the DTPA, which have not achieved equilibrium after 7 hours at the termination of the experiment.

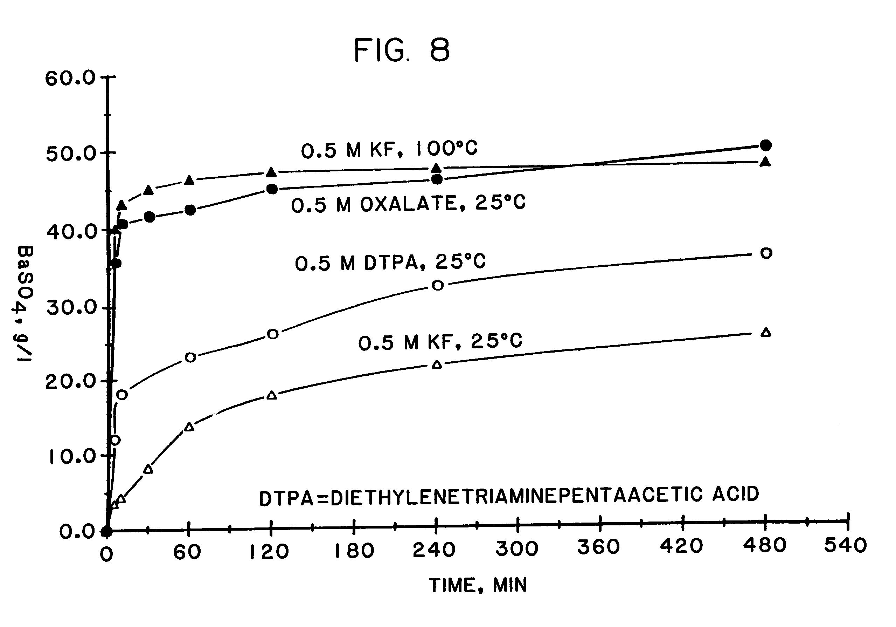

Although catalysts greatly enhance the rate of barium sulfate dissolution by DTPA or EDTA, this enhancement varies with the particular catalyst employed. Figure 8 illustrates graphically the difference in barium sulfate dissolution when selected catalysts are utilized with DTPA. These catalysts comprise 0.5 M potassium fluoride at 100°C and 25°C, and 0.5 M oxalate at 25°C.

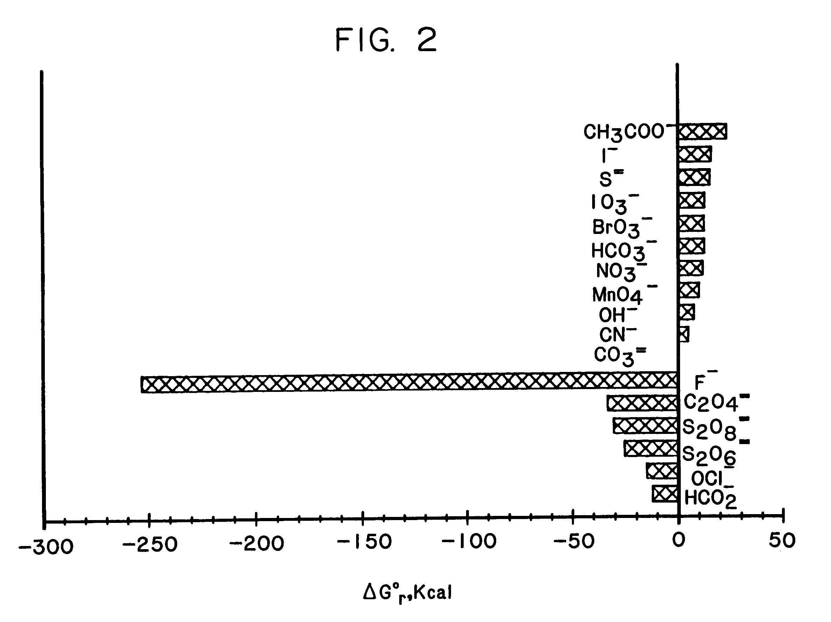

As mentioned above, the rate of barium sulfate scale dissolution varies with the solvent composition utilized. In order to determine candidates for use as a solvent, free energy calculations for the conversion of barium sulfate to barium carbonate were utilized. This is a well known conversion using concentrated sodium carbonate solution and solid alkaline earth metal surfaces. Free energy of conversion of barium sulfate to barium carbonate is calculated as essentially zero, meaning that the conversion is energetically favourable. However, the conversion is expected to reach equilibrium with less than full conversion of barium sulfate to barium carbonate. This is the actual reaction situation with only about 75-80 percent of the barium sulfate being converted. Further calculations were made using common anions, both organic and inorganic. Some of the anions considered are shown in Figure 2 of the free energy graph. Those anions with a negative free energy of reaction are considered very reactive toward conversion of alkaline earth sulfates to the respective barium compounds. Many of the anions are by nature strong oxidizing agents, for example, persulfate (S₂0₈), dithionate (S₂0₆), and hypochlorite (0C1), normally would not be considered practical for use in a hydrocarbon environment. Fluoride (F⁻) and oxalate (C₂0₄ ⁼) anions are found to be very active catalysts for ethylenediaminetetraacetic acid (EDTA) and diethylenetriaminepentaacetic acid (DTPA) or their salts for dissolution of barium sulfate, respectively. Experimentally, it was determined that the catalysts alone (without EDTA OR DTPA) have no scale dissolution properties of their own.

One example of a preferred aqueous solvent which can be used comprises 0.5M DTPA and 0.3M Oxalic acid adjusted to a pH of 12 with potassium hydroxide.

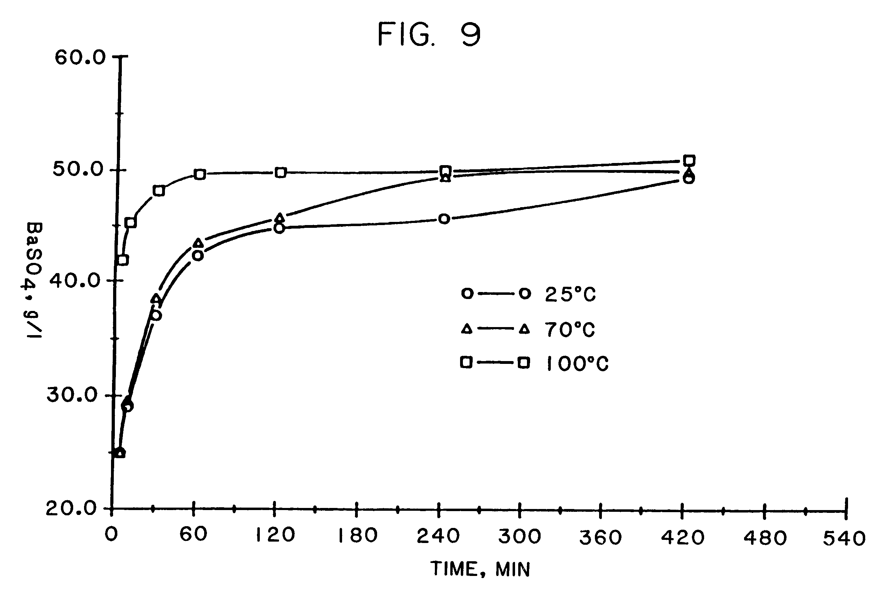

Figure 9 shows that the rate of dissolution of the barium sulfate scale is related to temperature, with faster rates of dissolution being attained at the higher temperature (0°C.)

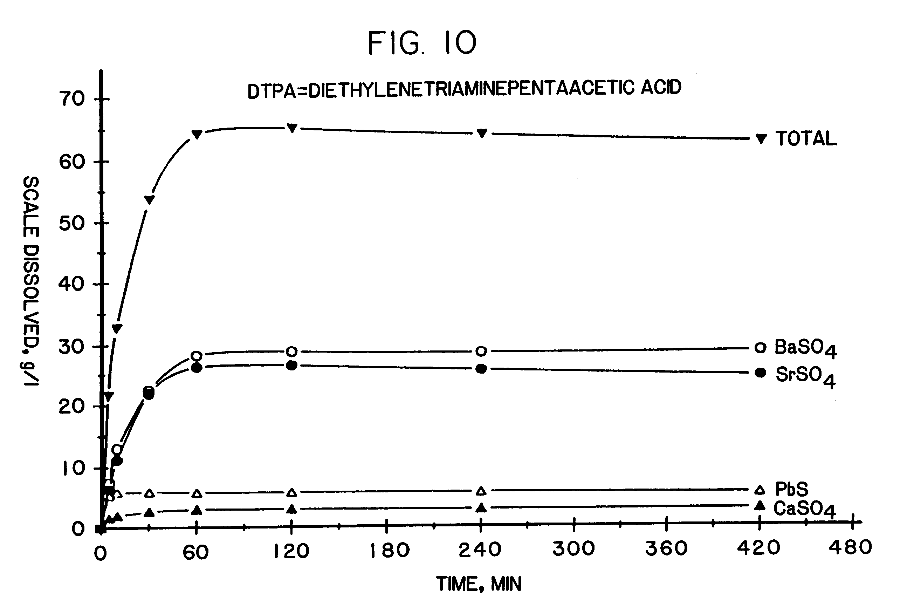

Figure 10 shows the results of a batch test carried with scale material removed from field tubing similar to that used in a continuous flow loop test in which the test solution was circulated. The samples of scale material were added to the solvent (0.5M DTPA, 0.5M oxalate pH=12, 0°C.) in a concentration equivalent to 60 g./l. of scale. The concentrations of the different species dissolved in the solvent at different times were determined. The results of the batch tests are shown in Figure 10 and indicate that in addition to the dissolution of the barium, the strontium sulfate also reaches equilibrium concentration in a very short time. The results from the flow loop tests are similar but with much lower final concentrations.

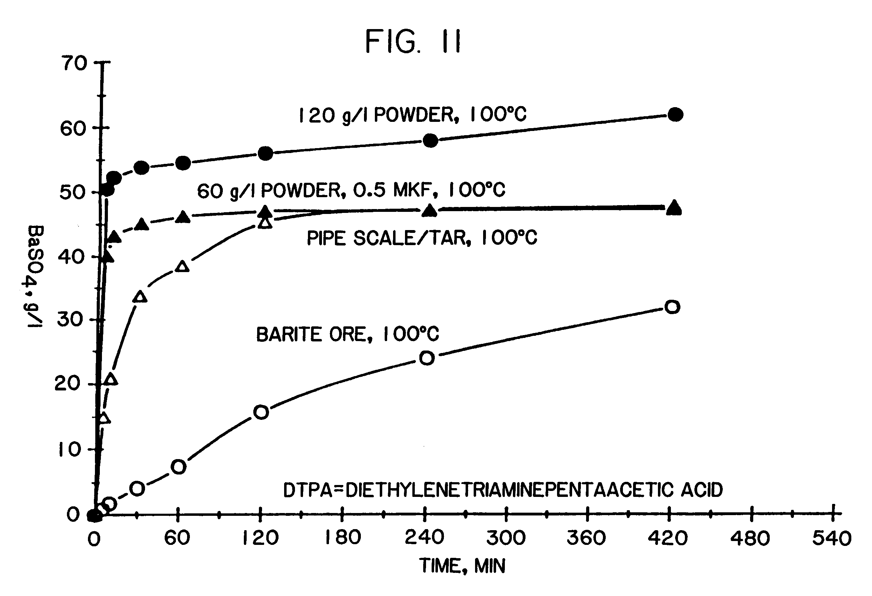

Figure 11 shows that the scale removal process is effective both with barium sulfate in the powder form and also with actual pipe scale/tar mixtures and with barite ore (BaSO₄).

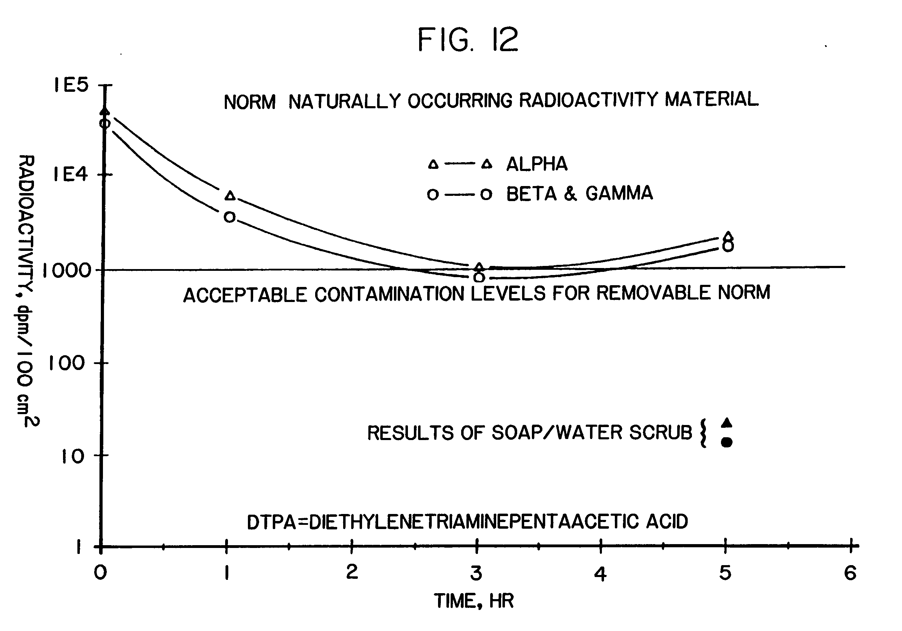

Figure 12 shows that the present scale removal technique is very effective for lowering residual radioactivity of pipe contaminated with radium-containing barium sulfate scale. As noted above, radium is frequently precipitated with barium in scale with the result that scaled pipe is often radioactive to the point that it cannot safely be used. A continuous flow loop test was used to remove the scale from pipe which was similar to that used with Figure 5 and the radioactivity was determined at successive times during the test. As shown in the Figure, the activity was reduced to an acceptable level after three hours without further treatment. It appears, however, that some residual activity arises from lead and other radio-isotopes which are not dissolved in the solvent (see Fig.5); these isotopes are decay products of radium and have originally been incorporated in the scale with the barium and the radium sulfates. Although they are not removed chemically by the present scale removal technique, the dissolution of the barium scale together with the other alkaline earth metal surfaces enabled these other components of the scale to be removed by simple abrasion. For Figure 7, the descaled pipe was scrubbed with a soft bristle brush using a detergent/water scrub solution. The result was to reduce the residual activity level to a very low value, below the appropriate regulatory standards. Thus, by using the present chemical scale removal technique in combination with a simple mechanical removal of loose, non-adherent material, previously radioactive pipe may quickly and readily be restored to useful, safe condition.

As noted above, the effect of cations is also very important to the success of the scale solvent, especially when added with the sizable portion of caustic required to adjust the pH to 12. Dissolution is enhanced as the size of the cation is increased, i.e. lithium, sodium, potassium and cesium. Lithium and sodium hydroxides in the presence of EDTA, or DTPA, and catalysts are not soluble at a pH of 12, the optimum value. Cesium is too difficult to obtain, both in quantity and price. Therefore, potassium hydroxide, in the form of caustic potash, is the pH adjusting reagent of choice.

Another effective chelant is cyclohexanediaminetetraaretic acid (CDTA), which may be used with any of the synergists disclosed hereinabove. CDTA is particularly useful with the oxalate anion at a pH of substantially 13.

## Claims

1. A method of removing alkaline earth metal sulfate scale, comprising:
(a) contacting said alkaline earth metal sulfate scale with an aqueous solution having a pH of substantially 8 to substantially 14, which solution contains an aminocarboxylic acid, polyaminocarboxylic acid or polyamine chelant, salts or mixtures thereof, and a catalyst which comprises anions of organic or inorganic acids and mixtures thereof in a concentration from substantially 0.01M to substantially 1.0M, said catalyst comprising oxalate anions; and
(b) allowing said solution to remain in contact with said alkaline earth metal sulfate scale for a time sufficient and at a temperature sufficient to dissolve said scale.

2. A method according to claim 1, wherein the chelating agent is EDTA or DTPA.

3. A method according to claim 1 or 2, wherein the chelating agent is present in a concentration from substantially 0.1M to substantially 1.0M.

4. A method according to claim 1, 2 or 3, wherein the pH of the solution is from substantially 11 to substantially 13.

5. A method according to claim 1, 2 or 3, wherein the pH of the solution is substantially 12.

6. A method according to any preceding claim, wherein the pH of the solution is provided by a potassium base.

7. A method according to claim 6, wherein the potassium base is potassium hydroxide.

8. A method according to any preceding claim, wherein the solution is preheated to 25°C to 100°C prior to being brought into contact with the scale.

9. A method according to any preceding claim, wherein the scale contains barium sulfate, strontium sulfate or mixtures thereof.

10. A method according to any preceding claim, wherein the scale contains radium, said radium being removed by the scale removing solution.

11. A method according to any preceding claim, wherein the solution is contacted with a subsurface formation to remove scale from said formation.

12. A method according to any preceding claim, wherein the solution is directed down a cased wellbore, from which said scale is removed by dissolution in said solution, and subsequently said dissolved scale is removed from the wellbore.

13. A method according to any of claims 1 to 12, wherein said solution is contacted with oilfield tubular goods contaminated with radioactive, radium-containing sulfate scale, whereby radium is removed from said goods.

14. A method according to any preceding claim, wherein the scale is contacted with the solution for up to four hours.

## Patentansprüche

1. Verfahren zur Entfernung von Erdalkalimetallsulfat-Wasserstein, umfassend:
(a) das Kontaktieren des Erdalkalimetallsulfat-Wassersteins mit einer wäßrigen Lösung mit einem pH-Wert von im wesentlichen 8 bis im wesentlichen 14, wobei die Lösung ein Aminocarbonsäure-, Polyaminocarbonsäure- oder Polyamin-Chelatbildungsmittel, Salze oder Gemische davon und einen Katalysator, der Anionen von organischen und anorganischen Säuren und Gemische davon in einer Konzentration von im wesentlichen 0,01 M bis im wesentlichen 1,0 M umfaßt, enthält, wobei der Katalysator Oxalatanionen umfaßt; und
(b) das Belassen der Lösung in Kontakt mit dem Erdalkalimetallsulfat-Wasserstein für eine ausreichende Zeitspanne und bei einer ausreichenden Temperatur, um den Wasserstein aufzulösen.

2. Verfahren nach Anspruch 1, wobei es sich beim chelatbildenden Mittel um EDTA oder DTPA handelt.

3. Verfahren nach Anspruch 1 oder 2, wobei das chelatbildende Mittel in einer Konzentration von im wesentlichen 0,1 M bis im wesentlichen 1,0 M vorhanden ist.

4. Verfahren nach Anspruch 1, 2 oder 3, wobei der pH-Wert der Lösung im wesentlichen 11 bis im wesentlichen 13 beträgt.

5. Verfahren nach Anspruch 1, 2 oder 3, wobei der pH-Wert der Lösung im wesentlichen 12 beträgt.

6. Verfahren nach einem der vorstehenden Ansprüche, wobei für den pH-Wert der Lösung durch eine Kaliumbase gesorgt wird.

7. Verfahren nach Anspruch 6, wobei es sich bei der Kaliumbase um Kaliumhydroxid handelt.

8. Verfahren nach einem der vorstehenden Ansprüche, wobei die Lösung vor dem Kontaktieren mit dem Wasserstein auf 25°C bis 100°C vorerwärmt wird.

9. Verfahren nach einem der vorstehenden Ansprüche, wobei der Wasserstein Bariumsulfat, Strontiumsulfat oder Gemische davon enthält.

10. Verfahren nach einem der vorstehenden Ansprüche, wobei der Wasserstein Radium enthält, wobei das Radium durch die Wasserstein-Entfernungslösung entfernt wird.

11. Verfahren nach einem der vorstehenden Ansprüche, wobei die Lösung mit einer unterirdischen Formation zur Entfernung von Wasserstein aus der Formation in Kontakt gebracht wird.

12. Verfahren nach einem der vorstehenden Ansprüche, wobei man die Lösung auf ein verrohrtes Bohrloch anwendet, aus der der Wasserstein durch Auflösen in der Lösung entfernt wird und anschließend der aufgelöste Wasserstein aus dem Bohrloch entfernt wird.

13. Verfahren nach einem der Ansprüche 1 bis 12, wobei die Lösung mit Erdölgewinnungs-Rohrgut, das mit radioaktivem, radiumhaltigen Sulfat-Wasserstein verunreinigt ist, in Kontakt gebracht wird, wobei Radium aus dem Rohrgut entfernt wird.

14. Verfahren nach einem der vorstehenden Ansprüche, wobei der Wasserstein bis zu 4 Stunden mit der Lösung in Kontakt gebracht wird.

## Revendications

1. Procédé pour éliminer du tartre à base de sulfate de métal alcalino-terreux, comprenant :
(a) la mise en contact de ce tartre à base de sulfate de métal alcalino-terreux avec une solution aqueuse ayant un pH de pratiquement 8 à pratiquement 14, laquelle solution contient un acide aminocarboxylique, un acide polyaminocarboxylique ou une polyamine comme agent chélateur, des sels ou des mélanges de ceux-ci, et un catalyseur qui comprend des anions d'acides organiques ou inorganiques et leurs mélanges en une concentration comprise entre pratiquement 0,01 M et pratiquement 1,0 M, ce catalyseur comprenant des anions oxalates; et
(b) le maintien de cette solution en contact avec ce tartre à base de sulfate de métal alcalino-terreux pendant une période de temps suffisante et à une température suffisante pour dissoudre ce tartre.

2. Procédé suivant la revendication 1, dans lequel l'agent chélateur est l'EDTA ou le DTPA.

3. Procédé suivant les revendications 1 ou 2, dans lequel l'agent chélateur est présent en une concentration comprise entre pratiquement 0,1 M et pratiquement 1,0 M.

4. Procédé suivant les revendications 1, 2 ou 3, dans lequel le pH de la solution est compris entre pratiquement 11 et pratiquement 13.

5. Procédé suivant les revendications 1, 2 ou 3, dans lequel le pH de la solution est pratiquement de 12.

6. Procédé suivant l'une quelconque des revendications précédentes, dans lequel le pH de la solution est fourni par une base au potassium.

7. Procédé suivant la revendication 6, dans lequel la base au potassium est l'hydroxyde de potassium.

8. Procédé suivant l'une quelconque des revendications précédentes, dans lequel la solution est préchauffée à une température comprise entre 25 et 100°C avant d'être mise en contact avec le tartre.

9. Procédé suivant l'une quelconque des revendications précédentes, dans lequel le tartre contient du sulfate de baryum, du sulfate de strontium ou leurs mélanges.

10. Procédé suivant l'une quelconque des revendications précédentes, dans lequel le tartre contient du radium, ce radium étant éliminé par la solution éliminant le tartre.

11. Procédé suivant l'une quelconque des revendications précédentes, dans lequel la solution est mise en contact avec une formation souterraine pour éliminer le tartre de cette formation.

12. Procédé suivant l'une quelconque des revendications précédentes, dans lequel la solution est envoyée en bas d'un puits de forage avec cuvelage, duquel ce tartre est éliminé par dissolution dans cette solution et ensuite, ce tartre dissous est enlevé du trou de forage.

13. Procédé suivant l'une quelconque des revendications 1 à 12, dans lequel cette solution est mise en contact avec des éléments tubulaires de champs pétrolifères contaminés par du tartre à base de sulfate contenant du radium radioactif, si bien que le radium est éliminé de ces éléments.

14. Procédé suivant l'une quelconque des revendications précédentes, dans lequel le tartre est mis en contact avec la solution pendant une période de temps allant jusqu'à 4 heures.
